# EUROPÄISCHE PATENTANMELDUNG

(11) **EP 4 559 673 A1**
(43) Veröffentlichungstag der Anmeldung: **28.05.2025**
(21) Anmeldenummer: 23211833.1
(22) Anmeldetag: 23.11.2023
(51) Int. Cl.: B32B 7/12, B32B 21/04, B32B 21/13, B32B 21/14, F16B 15/00

(54) **HOLZNAGEL**

(71) Anmelder: BAUSSMANN Collated Fasteners GmbH, 57413 Finnentrop (DE)
(72) Erfinder: Baußmann, Winfried, 57413 Finnentrop (DE)
(74) Vertreter: Ostriga Wirths und Vorwerk Patentanwälte PartGmbB

(57) **Zusammenfassung**

Die Erfindung betrifft ein Holznagel, bestehend aus einem Schaft und einer an wenigstens an einem Ende angeordneten Spitze, wobei der Holznagel aus einer Vielzahl von Holzschichten (Furniere) gebildet ist, die miteinander durch Klebstoff verbunden sind.

Die Aufgabe der Erfindung besteht deshalb darin, einen neuen Holznagel zu schaffen, der wesentlich kostengünstiger herzustellen und deutlich umweltfreundlicher hinsichtlich seiner Herstellung ist.

Die Lösung der Aufgabe ergibt sich ausgehend von dem zuvor beschriebenen Stand der Technik aus einem Holznagel, bestehend aus einem Schaft, der an wenigstens einem Ende eine Spitze aufweist, wobei der Holznagel aus einer Vielzahl von Holzschichten (Furniere) gebildet ist, die miteinander durch Klebstoff verbunden sind, wobei die Holzschichten jeweils eine Dicke von > 1mm aufweisen und der Klebstoffanteil am Gesamtgewicht des Nagels < 10% ist.

## Beschreibung

Die Erfindung betrifft ein Holznagel, bestehend aus einem Schaft und einer an wenigstens an einem Ende angeordneten Spitze, wobei der Holznagel aus einer Vielzahl von Holzschichten (Furniere) gebildet ist, die miteinander durch Klebstoff verbunden sind.

Ein derartiger Holznagel ist aus dem druckschriftlich nicht belegbaren Stand der Technik allgemein bekannt. Der aus dem Stand der Technik bekannte Holznagel besteht aus einer Vielzahl von Holzschichten (Furniere), wobei die Furniere eine maximale Schichtdicke von 0,6 mm aufweisen, die mittels Phenolharzes miteinander verbunden werden.

Bei Phenolharz handelt es sich um ein Duroplast, der nach dem Aushärten durch Wärme nicht replastifizierbar ist. Derartige Holznägel nach dem Stand der Technik werden heutzutage üblicherweise aus europäischer Rotbuche erstellt, wobei im ersten Schritt feine Furnierschnitte erstellt werden, die dann durch Eintauchung beziehungsweise Vakuumimprägnierung mit Phenolharzen versehen werden. Die aufeinanderliegenden mit Phenolharz getränkten Furnierholzschichten werden im nächsten Schritt einer Druck- und Wärmebehandlung von mindestens 8 Stunden unterworfen, wodurch eine Furnierholzplatte entsteht, die im nächsten Schritt beispielsweise auf Maße von 1 x 2m zugeschnitten werden.

Der nächste Schritt ist das Zerteilen der Furnierholzplatten in quadratische Streifen mit 6 bis 7 Millimeter Kantenlänge. Danach werden aus diesen quadratischen Streifen Rundstäbe mit einem Durchmesser von 3 bis 6 mm gefräst, wobei im letzten Schritt dann jeweils eine Nagelspitze sowie gegebenenfalls ein Kopf angeformt wird.

Holznägel nach diesem Stand der Technik sind in der Herstellung sehr teuer, weil es herstellungstechnisch sehr aufwendig ist derartige Furnierschichten herzustellen, da bei der Herstellung eine hohe Abfallquote anfällt.

Auch ist die Herstellung von Phenolharzen nicht nur sehr kostenintensiv, sondern umwelttechnisch problematisch, da es sich hierbei um ein Mineralölprodukt handelt.

Die Aufgabe der Erfindung besteht deshalb darin, einen neuen Holznagel zu schaffen, der wesentlich kostengünstiger herzustellen und deutlich umweltfreundlicher hinsichtlich seiner Herstellung ist.

Die Lösung der Aufgabe ergibt sich ausgehend von dem zuvor beschriebenen Stand der Technik aus einem Holznagel gemäß den nachfolgenden Merkmalen des Anspruchs 1:
Holznagel, bestehend aus einem Schaft, der an wenigstens einem Ende eine Spitze aufweist, wobei der Holznagel aus einer Vielzahl von Holzschichten (Furniere) gebildet ist, die miteinander durch Klebstoff verbunden sind, dadurch gekennzeichnet, dass die Holzschichten jeweils eine Dicke von > 1mm aufweisen und der Klebstoffanteil am Gesamtgewicht des Nagels < 10% ist.

Der erfindungsgemäße Holznagel hat den Vorteil, dass er wesentlich kostengünstiger herzustellen ist und aufgrund des geringeren Phenolharzanteils eine deutlich verbesserte Ökobilanz aufweist.

Durch den Aufbau des Holznagels mittels deutlich dickerer Holzschichten (Furniere) entsteht einerseits eine wesentlich geringere Ausschussquote bei der Erstellung dieser Holzschichten und andererseits wird der Holzanteil im erfindungsgemäßen Holznagel deutlich größer beziehungsweise der Phenolanteil deutlich geringer. Durch den geringeren Phenolanteil ergibt sich zum einen eben auch eine Kostenersparnis und darüber hinaus eine bessere Ökobilanz.

Letztlich weist der erfindungsgemäße Holznagel weniger Klebflächen (Fügestellen) auf, die jeweils auch lokale Schwachstellen darstellen, wodurch sich die Stabilität des Holznagels verbessert.

Bei einer bevorzugten Ausführungsform der Erfindung weist der Holznagel zum Verbinden der Holzschichten einen biobasierten Klebstoff auf, der zu einem wesentlichen Teil aus pflanzlichen und/oder tierischen Bestandteilen besteht.

Dadurch entsteht auf vorteilhafterweise ein wesentlich natürliches Produkt mit einer hervorragenden Ökobilanz und einer besseren biologischen Abbaubarkeit.

Ein biobasiertes Produkt - wie der oben genannte Klebstoff - ist als ein kommerzielles oder industrielles Produkt definiert, das ganz oder zu einem wesentlichen Teil aus biologischen Produkten, erneuerbaren landwirtschaftlichen Materialien, forstwirtschaftlichen Materialien oder tierischen Materialien besteht.

Die Ökobilanz ist deshalb sehr positiv, weil aus Pflanzen oder Bäumen gewonnene biobasierte Klebstoffe beim Abbau oder bei einer energetischen Nutzung nur so viel Kohlenstoffdioxid (CO₂) freisetzen, wie sie während der Wachstumsphase gespeichert haben.

Bei einer weiteren Ausführungsform weist der Holznagel zum Verbinden der Holzschichten einen biobasierten Klebstoff auf, der im Wesentlichen vollständig aus pflanzlichen und/oder tierischen Bestandteilen besteht.

Auf vorteilhafterweise kann dieser biobasierte Klebstoff beispielsweise natürliche Rohstoffe, wie Zucker, Zitronensäure, Glutin, Kasein, Stärke, Sojaprotein, Cellulose, Dextrine, Naturkautschuk, Naturharze, Kohlenwasserstoffharze (KW-Harze) aufweisen.

Grundsätzlich ist es auch denkbar, dass der biobasierte Klebstoff aus zusätzlichem Lignin besteht, welches zuvor aus Holzprodukten gewonnen wurde.

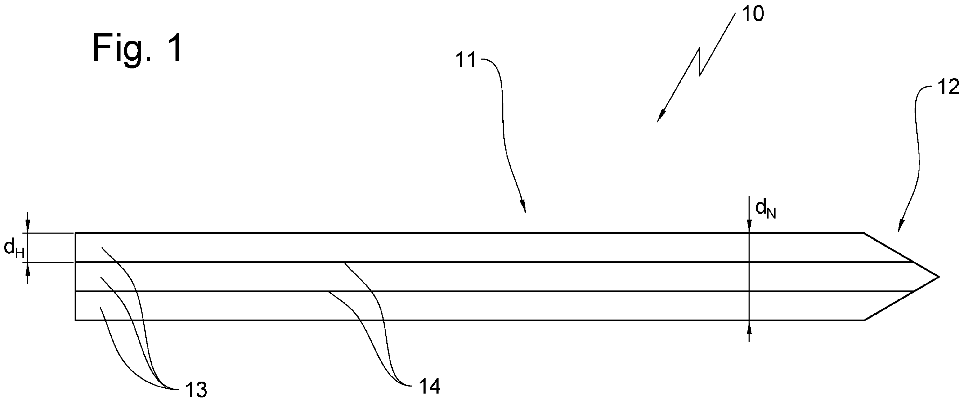

Weitere Vorteile der Erfindung ergeben sich aus der nachfolgenden Beschreibung eines Ausführungsbeispiels, welches durch die Figur 1 dokumentiert ist.

Der erfindungsgemäße Holznagel ist insgesamt mit der Bezugsziffer 10 gekennzeichnet und in der Schnittzeichnung dargestellt.

Der Holznagel 10 wird durch einen Schaft 11 und eine Spitze 12 gebildet, Der Schaft 11 und die Spitze 12 bestehen aus Holzschichten (Furniere) 13, die jeweils durch eine Klebstoffschicht 14, vorzugsweise aus biobasiertem Klebstoff, durch lang auf das Vorprodukt des Holznagels einwirkende Druck und Wärme miteinander fest verbunden werden.

Der Holznagel 10 hat einen Durchmesser d_{N} von 5mm und wird aus zwei Holzschichten (Furnieren 13) und der Dichte d_{H} gebildet, die jeweils durch eine Klebstoffschicht 14 verbunden sind.

Auf nicht dargestellte Weise, kann der Holznagel 10 auch einen Kopf aufweisen.

**Bezugszeichenliste**

| | |
|---|---|
| Holznagel | 10 |
| Schaft | 11 |
| Spitze | 12 |
| Furniere | 13 |
| Klebstoffschicht | 14 |
| Durchmesser des Nagels | D_{N} |
| Dicke der Furniere | d_{H} |

## Patentansprüche

1. Holznagel (10), bestehend aus einem Schaft (11), der an wenigstens einem Ende eine Spitze (12) aufweist, wobei der Holznagel (10) aus einer Vielzahl von Holzschichten (Furniere (13) gebildet ist, die miteinander durch Klebstoff (14) verbunden sind, **dadurch gekennzeichnet, dass** die Holzschichten (13) jeweils eine Dicke (d) von > 1mm aufweisen und der Klebstoffanteil am Gesamtgewicht des Holznagels (10) < 10% ist.

2. Holznagel (10) nach Anspruch 1, **dadurch gekennzeichnet, dass** der Holznagel (10) zum Verbinden der Holzschichten (13) einen biobasierten Klebstoff (14) aufweist, der zu einem wesentlichen Teil aus pflanzlichen und/oder tierischen Bestandteilen besteht.

3. Holznagel (10) nach Anspruch 1, **dadurch gekennzeichnet, dass** der Holznagel (10) zum Verbinden der Holzschichten (13) einen biobasierten Klebstoff (14) aufweist, der im Wesentlichen vollständig aus pflanzlichen und/oder tierischen Bestandteilen besteht.

4. Holznagel nach Anspruch 2 oder 3, **dadurch gekennzeichnet, dass** der biobasierte Klebstoff (14) natürliche Rohstoffe, wie Glutin, Kasein, Stärke, Sojaprotein, Cellulose, Dextrine, Naturkautschuk, Naturharze, Kohlenwasserstoffharze (KW-Harze) aufweist.

5. Holznagel nach Anspruch 2 oder 3, **dadurch gekennzeichnet, dass** der biobasierte Klebstoff (14) aus zusätzlichem Lignin besteht.
